# EUROPEAN PATENT SPECIFICATION

(11) **EP 2 299 085 B1**
(45) Date of publication and mention of the grant of the patent: **02.08.2017**
(21) Application number: 09169964.5
(22) Date of filing: 10.09.2009
(51) Int. Cl.: F01P 5/12, F01P 7/16, F16D 27/00

(54) **Coolant pump**
Kühlmittelpumpe
Pompe de refroidissement

(43) Date of publication of application: 23.03.2011
(73) Proprietor: Pierburg Pump Technology GmbH, 41460 Neuss (DE)
(72) Inventor: Durand, Jean-Michel, 57070 Metz (FR); Reininger, Pierre, 57970 Basse Ham (FR)
(74) Representative: Patentanwälte ter Smitten Eberlein-Van Hoof Rütten Partnerschaftsgesellschaft mbB

(56) References cited:
- EP-A2- 1 696 111
- DE-A1- 2 638 944

## Description

The invention refers to a mechanical combustion engine coolant pump for pumping a coolant to an internal combustion engine.

A mechanical coolant pump is a coolant pump which is driven by the combustion engine, for example by using a driving belt driving a driving wheel of the pump. As long as the combustion engine is cold, only a minimum or even no coolant flow is needed. Therefore, switchable mechanical coolant pumps are used which are provided with a clutch for coupling the driving wheel with the pump wheel pumping the coolant. As long as the combustion engine is cold, the clutch is disengaged so that the circulation of the coolant is in minimized or stopped, with the result that the combustion engines warming is speeded up.

A common type of clutch is the mechanical friction clutch which is actuated by an electromagnet. If the electromagnet is energized, it attracts an opposite friction disk of the clutch to engage the two friction disk's. If the electromagnet fails, the clutch remains in the disengaged state so that a sufficient coolant circulation is not guaranteed and a serious damage of the combustion engine can appear.

EP 1696111 discloses a coolant pump with a switchable friction clutch for coupling the driving wheel with the pump wheel. The friction clutch comprises a permanent magnet causing an axial magnetic attraction force forcing the friction clutch into an engaged state. An electromagnet is provided in a magnetic circuit together with a permanent magnet so that the attraction force of the permanent magnet is reduced with respect to the clutch when the electromagnet is energized.

It is an object of the invention to provide a failsafe combustion engine coolant pump with a electromechanically switched friction clutch.

This object is solved with a combustion engine coolant pump with the features of claim 1.

The coolant pump is provided with a switchable friction clutch for coupling the driving wheel with the pump wheel. An axial preload spring preloads the clutch into a disengaged state with a preload force. A permanently magnetized magnet causes an axial magnetic attraction force to force the clutch into an engaged state. The electromagnet is arranged in a magnetic circuit together with the permanent magnet. When the electromagnet is energized, the electromagnet acts with a polarization opposite to the polarization of the permanent magnet so that the magnetic attraction force of the permanent magnet is reduced or compensated so much that the clutch is pushed by the preload spring into the disengaged position.

If the electromagnet is not energized, the clutch remains or is switched into the engaged state because the permanent magnet is pulling the two friction plates of the clutch against the spring force of the preload spring together. If the electromagnet fails, the clutch remains in or is switched into the engaged state so that the pump wheel is connected to the driving wheel and the coolant is actively pumped and circulated. If the preload spring is broken, the pump is always driven in the engaged state because a minimal attraction force of the permanent magnet remains. As a consequence, the coolant pump is absolutely failsafe.

The attraction force of the permanent magnet is higher than the preload force of the preload spring, if the electromagnet is not energized and the clutch is in the disengaged state. If the clutch is in the disengaged state and the electromagnet is not energized, the effective attraction force of the permanent magnet has to be high enough to switch the clutch into an engaged state against the preload force of the preload spring.

According to a preferred embodiment of the invention, the permanent magnet is fixed to the driving wheel. Generally, the permanent magnet can also be a stationary part which is not rotating. If the permanent magnet is fixed to the driving wheel, the number of magnetic gaps which weaken the engaging attraction force of the permanent magnet can be reduced to a minimum. If the permanent magnet is provided directly at the driving wheel and the driving wheel is forming one of the two friction plates of the friction clutch, the attraction force of the permanent magnet with respect to the pump wheel sided friction plate of the clutch is maximized.

Preferably, the electromagnet is fixed to a stationary pump frame. The stationary pump frame can be a pump housing as well. However, the electromagnet is a stationary and non-rotating part of the pump. As a consequence, the electrical connection of the electromagnet is simple and durable.

According to a preferred embodiment of the invention the clutch is provided with a first friction disk at the side of the driving wheel and with a second friction disk at the side of the pump wheel. The pump wheel sided friction disk is preloaded by the preload spring. The preload spring is a cup-like spring holding the pump wheel-sided friction disk. The cup-like preload spring has not necessarily the form of a closed ring but can be formed by two or more radial spring arms, as well. With the pump wheel sided friction disk is a ring body which corresponds with the friction ring of the pump wheel.

According to a preferred embodiment, the ring body of the pump wheel sided friction disk is made out of a ferromagnetic material which interacts with the permanent magnet at the driving wheel side.

According to a preferred embodiment, the permanent magnet is a ring body, not a cylinder body, and is axially magnetized, not radially magnetized.

Preferably, the electromagnet is provided with a ring-like exciting coil which generates a toroidal electromagnetic field when excited. In addition, the back iron body is provided to lead the electromagnetic field generated by the electromagnet to the permanent magnet to effectively reduce or compensate the attraction force of the permanent magnet with respect to the pump wheel sided friction disk.

According to a preferred embodiment the axial projection of the exciting coil overlaps the permanent magnet ring body. This arrangement makes it possible that the electromagnetic field generated by the exciting coil effectively reduces or compensates the permanent attraction force of the permanent magnet with respect to the pump wheel sided friction disk.

According to a preferred embodiment, the driving wheel is a pulley for a driving belt which is driven by the internal combustion engine.

An embodiment of the invention is described in more detail below with reference to the drawing:

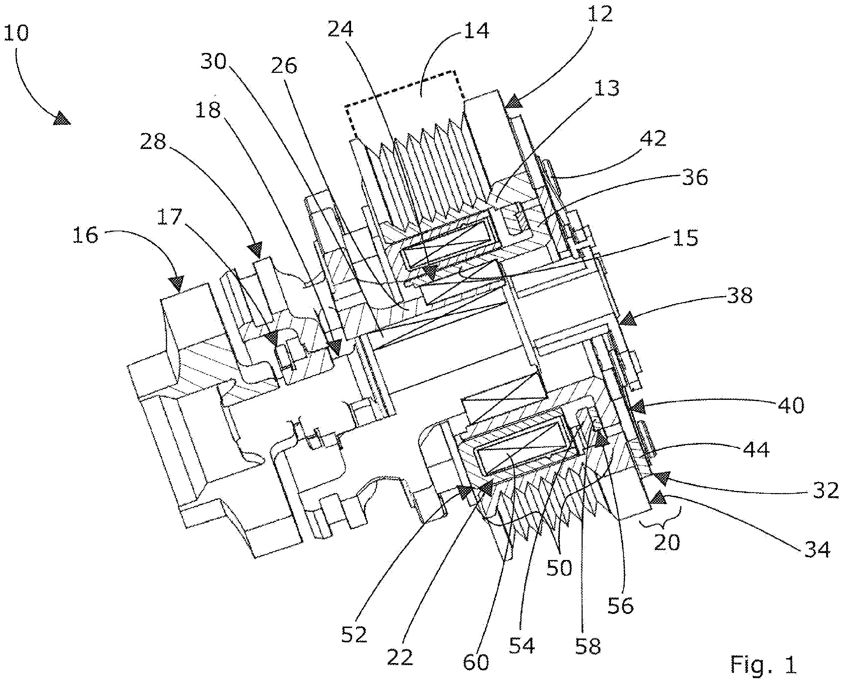

Figure 1 shows a section of a combustion engine coolant pump in perspective view, with a mechanical friction clutch actuated by an electromagnet.

The figure 1 shows a longitudinal section of a switchable coolant pump 10 which is driven by an internal combustion engine (not shown) and is pumping a liquid coolant through the coolant channels of the combustion engine block (not shown).

The coolant pump 10 is provided with a driving wheel 12 with a pulley 13 for a driving belt 14, a pump wheel 16 supported by a rotating shaft 18 and a friction clutch 20 which is switched by an electromagnet 22. The friction clutch 20 in the engaged state connects the driving wheel 12 with the pump wheel 16.

The rotatable driving wheel 12 is U-shaped in cross section and consists of a ferromagnetic material, whereby the open side of the driving wheel 12 is orientated axially to the pump wheel 16. The radially outside leg 13 of the U-shaped driving wheel 12 is the cylindrical pulley 13, the radially inside leg 15 is a cylinder as well and is supported by an outside roller bearing 24 which is supported at the outside of a cylinder part 26 of a stationary pump frame 28. The two driving wheel legs 13, 15 are connected by the radial ring-like bar 36. The driving wheel 12 is made in one piece.

The rotating shaft 18 is supported by an inside roller bearing 30 which is supported at the inside of the cylinder part 26 of the pump frame 28. The pump frame 28 is fixable to the combustion engine block (not shown). The rorating shaft 18 is sealed against the pump frame 28 by a shaft sealing 17.

The friction clutch 20 consists of a friction disk 32 supported by the shaft 18 and an opposite friction disk 34 formed by the axial outside (distal) surface of the radial bar 36 connecting the two legs 13, 15 of the driving wheel 12. The pump wheel sided friction disk 32 consists of a hub body 38 which is fixed to the shaft 18, a preload disk spring 40 fixed to the hub body 38, a friction ring body 44 of ferromagnetic material and three elastical connectors 42 elastically connecting the disk spring 40 with the friction ring body 44. The preload spring 40 axially preloads or biases the friction ring body 44, and therefore the clutch 20, into a disengaged state.

Inside the ring-like space enclosed by the U-shaped driving wheel 12, an electromagnetic unit 50 is provided which consists of an electromagnet 22 being fixed to the pump frame 28, two back irons 52, 54 made of a ferromagnetic material and the permanent magnet 56 in form of a ring body 58 which is axially magnetized.

The electromagnet 22 consists of a ring-like exciting coil 60 which generates a toroidal electromagnetic field when the electromagnet 22 is energized with DC. The back irons 52, 54 are formed so as to lead the electromagnetic field generated by the electromagnet 22 along the permanent magnet 56 in a way that causes a reduction or a compensation of the magnetic field and of the magnetic force generated by the permanent magnet 56 with respect to the friction ring body 44.

When the electromagnet 22 is energized with DC, it generates an electromagnetic field with a constant polarization which acts against the polarization of the magnetic field generated by the permanent magnet 56. As a result, the total axial magnetic force is reduced so much that the disengagement force of the disk spring 40 is higher than the total (electro-) magnetic axial force of the electromagnetic unit 50 so that the friction ring body 44 is forced into a disengaged position and state. The ring body 44 remains in the disengaged state as long as the electromagnet 22 is energized. As soon as the electromagnet 22 is not energized, the total axial attraction force of the electromagnetic unit 50 is identical with the unweakend magnetic force of the permanent magnet 56, and is so strong that the friction ring body 44 is pulled into the engaged state against the disengagement force of the preload spring 40.

If the electromagnet 22 fails, the friction clutch 22 engages or/and remains engaged so that the clutch is fail safe.

## Claims

1. Combustion engine coolant pump (10) for pumping a coolant to an internal combustion engine, with
a driving wheel (12) which is driven by the combustion engine,
a pump wheel (16) which is driven by the driving wheel (12),
a switchable friction clutch (20) for coupling the driving wheel (12) with the pump wheel (16), and
the friction clutch (20) comprising:
an axial preload spring (40) preloading the clutch (20) into a disengaged state with a preload force,
a permanent magnet (56) being magnetized axially or radially and causing an axial magnetic attraction force forcing the friction clutch (20) into an engaged state, and
an electromagnet (22) arranged in a magnetic circuit together with the permanent magnet (56), the energized electromagnet (22) acting with a polarization generating an opposite polarization to the polarization of the permanent magnet (56) thereby reducing the total magnetic attraction force of the permanent magnet (56) with respect to the clutch (20), so that the clutch (20) is pushed by the preload spring (40) into the disengaged position,
whereby the attraction force of the permanent magnet (56) is higher than the preload force of the preload spring (40), if the electromagnet (22) is not energized.

2. Combustion engine coolant pump (10) of claim 1, whereby the permanent magnet (56) is fixed to the driving wheel (12).

3. Combustion engine coolant pump (10) of one of the preceding claims, whereby the electromagnet (22) is fixed to a stationary pump frame (28).

4. Combustion engine coolant pump (10) of one of the preceding claims, whereby the clutch (20) is provided with a driving wheel sided friction disk (34) and a pump wheel sided friction disk (32) preloaded by the preload spring (40), and the preload spring (40) is a cup spring holding the pump wheel sided friction disk (32) being a ring body (44).

5. Combustion engine coolant pump (10) of one of the preceding claims, whereby the wheel-sided ring body (44) is made out of a ferromagnetic material.

6. Combustion engine coolant pump (10) of one of the preceding claims, whereby the permanent magnet (56) is a ring body (58) which is axially magnetized.

7. Combustion engine coolant pump (10) of one of the preceding claims, whereby the electromagnet (22) is provided with a ring-like exciting coil (60).

8. Combustion engine coolant pump (10) of claim 8, whereby the axial projection of the exciting coil (60) is overlapping the permanent magnet ring body (58).

9. Combustion engine coolant pump (10) of one of the preceding claims, whereby the driving wheel (12) is provided with a pulley (13) for a driving belt (14).

## Patentansprüche

1. Verbrennungsmotorkühlmittelpumpe (10) zum Pumpen eines Kühlmittels zu einem Verbrennungsmotor, mit
einem Antriebsrad (12), das von dem Verbrennungsmotor angetrieben wird,
einem Pumpenrad (16), das von dem Antriebsrad (12) angetrieben wird, einer schaltbaren Reibungskupplung (20) zum Koppeln des Antriebsrades (12) mit dem Pumpenrad (16), und
wobei die Reibungskupplung (20) aufweist:
eine Axialvorspannungsfeder (40), welche die Kupplung (20) mittels einer Vorspannkraft in einen ausgerückten Zustand vorspannt,
einen Permanentmagneten (56), der axial oder radial magnetisiert ist und eine axiale magnetische Anziehungskraft bewirkt, welche die Reibungskupplung (20) in einen eingerückten Zustand bringt, und
einen Elektromagneten (22), der zusammen mit dem Permanentmagneten (56) in einer magnetischen Schaltung angeordnet ist, wobei der bestromte Elektromagnet (22) mit einer Polarisation wirkt, die eine zu der Polarisation des Permanentmagneten (56) entgegengesetzte Polarisation erzeugt, wodurch die magnetische Gesamtanziehungskraft des Permanentmagneten (56) in Bezug auf die Kupplung (20) verringert wird, so dass die Kupplung (20) von der Vorspannungsfeder (40) in die ausgerückte Position gedrückt wird,
wobei die Anziehungskraft des Permanentmagneten (56) stärker als die Vorspannungskraft der Vorspannungsfeder (40) ist, wenn der Elektromagnet (22) nicht bestromt ist.

2. Verbrennungsmotorkühlmittelpumpe (10) nach Anspruch 1, bei welcher der Permanentmagnet (56) an dem Antriebsrad (12) angebracht ist.

3. Verbrennungsmotorkühlmittelpumpe (10) nach einem der vorhergehenden Ansprüche, bei welcher der Elektromagnet (22) an einem stationären Pumpenrahmen (28) angebracht ist.

4. Verbrennungsmotorkühlmittelpumpe (10) nach einem der vorhergehenden Ansprüche, bei welcher die Kupplung (20) mit einer antriebsradseitigen Reibscheibe (34) und einer pumpenradseitigen Reibscheibe (32), die durch die Vorspannungsfeder (40) vorgespant ist, versehen ist, und wobei die Vorspannungsfeder (40) eine Tellerfeder ist, welche die pumpenradseitige Reibscheibe (32) hält, die ein Ringkörper (44) ist.

5. Verbrennungsmotorkühlmittelpumpe (10) nach einem der vorhergehenden Ansprüche, bei welcher der radseitige Ringkörper (44) aus einem ferromagnetischen Material hergestellt ist.

6. Verbrennungsmotorkühlmittelpumpe (10) nach einem der vorhergehenden Ansprüche, bei welcher der Permanentmagnet (56) ein Ringkörper (58) ist, der axial magnetisiert ist.

7. Verbrennungsmotorkühlmittelpumpe (10) nach einem der vorhergehenden Ansprüche, bei welcher der Elektromagnet (22) mit einer ringartigen Erregerspule (60) versehen ist.

8. Verbrennungsmotorkühlmittelpumpe (10) nach **Anspruch 8**, bei welcher die axiale Verlängerung der Erregerspule (60) den Permanentmagnetringkörper (58) überlappt.

9. Verbrennungsmotorkühlmittelpumpe (10) nach einem der vorhergehenden Ansprüche, bei welcher das Antriebsrad (12) mit einer Riemenscheibe (13) für einen Antriebsriemen (14) versehen ist.

## Revendications

1. Pompe de refroidissement (10) destinée à un moteur à combustion interne, servant à pomper un liquide de refroidissement vers un moteur à combustion interne, la pompe comportant
une roue d'entrainement (12) entraînée par ledit moteur à combustion interne,
une roue de pompe (16) entrainée par la roue d'entrainement (12),
une embrayage à friction (20) commutable pour coupler la roue d'entrainement (12) avec la roue de pompe (16), et
ladite embrayage à friction (20) comportant:
un ressort de précontrainte axiale (40) qui, par une force de précontrainte, précontraint ladite embrayage (20) dans un état engagé,
un aimant permanent (56) à magnétisation axial ou radial et générant une force d'attraction magnétique axiale forçant ladite embrayage à friction (20) dans un état engagé, et
un électroaimant (22) disposé dans un circuit magnétique avec ledit aimant permanent (56), ledit électroaimant (22) alimenté agissant avec une polarisation qui provoque une polarisation opposée à la polarisation dudit aimant permanent (56), de sorte que la force d'attraction magnétique totale dudit aimant permanent (56) par rapport à ladite embrayage (20) soit réduite de manière que ladite embrayage (20) soit poussé dans la position dégagée par le ressort de précontrainte (40),
la force d'attraction dudit aimant permanent (56) étant plus importante que la force de précontrainte du ressort de précontrainte (40) quand ledit électroaimant (22) non est alimenté.

2. Pompe de refroidissement (10) destinée à un moteur à combustion interne selon la revendication 1, dans laquelle ledit aimant permanent (56) est fixé sur la roue d'entrainement (12).

3. Pompe de refroidissement (10) destinée à un moteur à combustion interne selon l'une quelconque des revendications précédentes, dans laquelle ledit électroaimant (22) est fixé sur un cadre de pompe (28) stationnaire.

4. Pompe de refroidissement (10) destinée à un moteur à combustion interne selon l'une quelconque des revendications précédentes, dans laquelle ladite embrayage (20) est munie d'une disque de friction (34), côté roue d'entrainement, et d'une disque de friction (32), côté roue de pompe, précontrainte par le ressort de précontrainte (40), et le ressort de précontrainte (40) est un ressort à disque supportant la disque de friction (32), côté roue de pompe, qui est un corps annulaire (44).

5. Pompe de refroidissement (10) destinée à un moteur à combustion interne selon l'une quelconque des revendications précédentes, dans laquelle le corps annulaire (44), côté roue, est fabriqué d'un matériau ferromagnétique.

6. Pompe de refroidissement (10) destinée à un moteur à combustion interne selon l'une quelconque des revendications précédentes, dans laquelle ledit aimant permanent (56) est un corps annulaire (58) à magnétisation axiale.

7. Pompe de refroidissement (10) destinée à un moteur à combustion interne selon l'une quelconque des revendications précédentes, dans laquelle ledit électroaimant (22) est muni d'une bobine exitatrice (60) annulaire.

8. Pompe de refroidissement (10) destinée à un moteur à combustion interne selon **la revendication 8, dans** laquelle le prolongement axial de ladite bobine exitatrice (60) chevauche ledit corps annulaire (58) dudit aimant permanent.

9. Pompe de refroidissement (10) destinée à un moteur à combustion interne selon l'une quelconque des revendications précédentes, dans laquelle la roue d'entrainement (12) est munie d'une poulie (13) pour une courroie d'entrainement (14).
